# EUROPÄISCHE PATENTSCHRIFT

(11) **EP 1 253 839 B1**
(45) Veröffentlichungstag und Bekanntmachung des Hinweises auf die Patenterteilung: **27.07.2005**
(21) Anmeldenummer: 01951113.8
(22) Anmeldetag: 06.02.2001
(51) Int. Cl.: A46B 5/00, A46D 3/00, A61C 17/16

(54) **VERFAHREN ZUM HERSTELLEN EINES HOHLEN HANDGRIFFES FÜR EIN ZAHNREINIGUNGSGERÄT**
METHOD FOR PRODUCING A HOLLOW HANDLE FOR A TEETH CLEANING DEVICE
PROCEDE DE PRODUCTION D'UN MANCHE CREUX DESTINE A UN INSTRUMENT DE NETTOYAGE DES DENTS

(30) Priorität: 09.02.2000 DE 10005738
(43) Veröffentlichungstag der Anmeldung: 06.11.2002
(73) Patentinhaber: Trisa Holding AG, 6234 Triengen (CH)
(72) Erfinder: PFENNIGER, Philipp, CH-6234 Triengen (CH); HUBER, Beat, CH-6233 Büron (CH)
(74) Vertreter: Patentanwälte Schaad, Balass, Menzl & Partner AG
(86) Internationale Anmeldenummer: PCT/CH2001/000080
(87) Internationale Veröffentlichungsnummer: WO 2001/058306

(56) Entgegenhaltungen:
- WO-A-00/21405
- FR-A- 1 341 439
- US-A- 5 815 872
- US-A- 5 913 632
- US-A- 5 934 762

## Beschreibung

Die vorliegende Erfindung betrifft ein Verfahren zum Herstellen eines hohlen Handgriffes für ein Zahnreinigungsgerät gemäss Oberbegriff des Anspruches 1 sowie einen nach diesem Verfahren herstellbaren Handgriff.

Aus der DE-U-298 17 994 ist eine Zahnbürste bekannt, bei der der hohle Handgriff aus zwei in getrennten Schritten hergestellten Griffteilen besteht, von denen zumindest ein Griffteil schalenförmig ausgebildet ist. Die beiden Griffteile sind entlang der gemeinsamen Trennfuge miteinander verschweisst und somit unlösbar miteinander verbunden. Auch ein Verkleben der Griffteile wird vorgeschlagen.

Um aus Kunststoff bestehende Griffteile richtig miteinander verschweissen zu können setzt voraus, dass die Griffteile aus verschweissbaren Kunststoffen, d.h. aus Kunststoffen der gleichen Familie, bestehen, was die Auswahlmöglichkeit für die zu verwendenden Kunststoffe einschränkt.

Aus der FR-A-1.341.439 ist eine Zahnbürste bekannt, bei der die beiden Schalen des Handgriffs lösbar miteinander verbunden sind. Die eine, erste Schale weist eine Nut auf, in die im zusammengebauten Zustand der beiden Schalen ein Vorsprung an der andern, zweiten Schale eingreift. Die beiden Schalen werden mittels einer Schraube zusammengehalten. In die Nut der ersten Schale ist ein Dichtkörper eingelegt, welcher den Hohlraum im Handgriff gegen aussen abdichtet. Der Hohlraum im zweiteiligen Handgriff wird somit dadurch abgedichtet, dass in die Trennfuge zwischen den lösbar miteinander verbundenen Schalen ein Dichtkörper eingelegt wird, ohne dabei die Trennbarkeit der Schalen zu beeinträchtigen.

In der US-A-5,934,762 ist ein Verfahren zum Herstellen eines Zahnreinigungsgerätes beschrieben, bei dem zuerst die einzelnen Zahnbürstenkomponenten, nämlich ein Handgriff, zwei Bürstenteile sowie gegebenenfalls ein dritter Bürstenteil, getrennt voneinander hergestellt werden. In einem weiteren Schritt werden die beiden Bürstenteile mit dem einen Ende des Handgriffes zusammengebracht. Die so zusammengebrachten Teile werden anschliessend mit einem gummielastischen Kunststoffmaterial umspritzt, das diese Teile in einem gemeinsamen Bereich vollständig umschliesst und so fest zusammenhält. Die einzeln hergestellten Teile werden somit zuerst zusammengefügt und dann in einem gemeinsamen Bereich vollständig mit einem weichelastischen Kunststoff umspritzt, um so die Teile fest und unlösbar miteinander zu verbinden.

Der vorliegenden Erfindung liegt nun die Aufgabe zu Grunde, ein Verfahren der eingangs genannten Art zu schaffen, das es erlaubt, Griffteile aus den verschiedensten Materialien zu einem hohlen Handgriff zusammenzufügen und unlösbar und dicht miteinander zu verbinden.

Diese Aufgabe wird erfindungsgemäss durch die Merkmale des Anspruches 1 gelöst.

Dadurch, dass bei zusammengefügten Griffteilen diese entlang der gemeinsamen Trennfuge im Spritzgiessverfahren mit einem Kunststoffmaterial überspritzt bzw. umspritzt werden, wird auf einfache Weise eine dichte und von Hand nicht mehr lösbare Verbindung von hoher Qualität zwischen den Griffteilen erhalten.

Bevorzugte Weiterausgestaltungen des erfindungsgemässen Verfahrens bilden Gegenstand der abhängigen Ansprüche 2-12.

Ein nach dem erfindungsgemässen Verfahren herstellbarer Handgriff zeichnet sich aus durch die Merkmale der Ansprüche 13-21.

Im folgenden wird der Erfindungsgegenstand anhand der Zeichnungen näher erläutert. Es zeigen rein schematisch:
- Fig. 1;: in Seitenansicht eine Zahnbürste ohne Bürstenkopf mit voneinander getrennten Griffteilen,
- Fig. 2;: in Seitenansicht und teilweise im Schnitt die aus den beiden Griffteilen gemäss Fig. 1 zusammengesetzte Zahnbürste,
- Fig. 3;: einen Schnitt entlang der Linie III-III in Fig. 2,
- Fig. 4 und 5;: die Spritzgussform zum Herstellen der Verbindungsnaht zwischen den Griffteilen,
- Fig. 6;: einen Querschnitt durch den aus den beiden zusammengefügten und miteinander verbundenen Griffteilen bestehenden Handgriff,
- Fig. 7;: in einer der Fig. 6 entsprechenden Darstellung, jedoch in vergrössertem Massstab, eine andere Ausbildung der Verbindung zwischen den Griffteilen,
- Fig. 8;: in einer der Fig. 7 entsprechenden Darstellung eine weitere Ausbildung der Verbindung zwischen den Griffteilen,
- Fig. 9;: in Seitenansicht und in einer der Fig. 1 entsprechenden Darstellung eine andere Ausführungsform einer Zahnbürste vor dem Zusammenfügen der Griffteile,
- Fig. 10;: in Seitenansicht die Zahnbürste gemäss Fig. 8 in zusammengebautem Zustand, und
- Fig. 11;: die Spritzgussform zum Herstellen der Griffteile und der Verbindungsnaht.

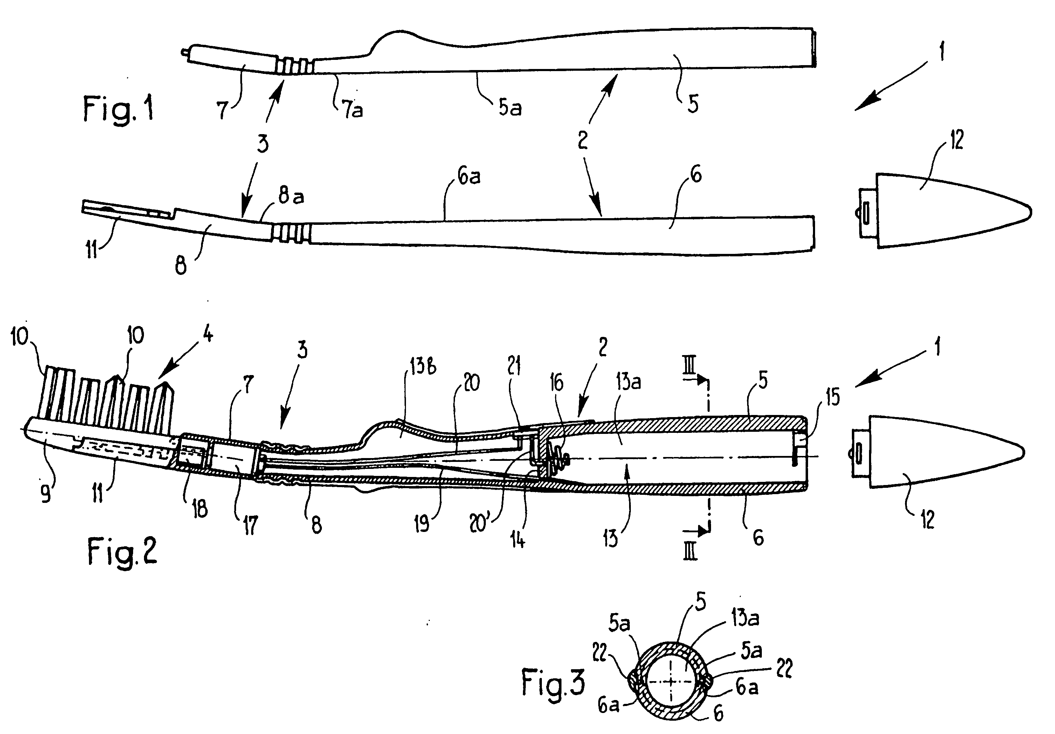

Vorerst wird anhand der Figuren 1-3 der Aufbau eines erfindungsgemäss hergestellten Zahnreinigungsgerätes, nämlich einer elektrisch angetriebenen Zahnbürste 1, beschrieben.

Die Zahnbürste 1 weist einen Handgriff 2 auf, der in einen Hals 3 übergeht, an dem ein Bürstenkopf 4 befestigt ist. Der Handgriff 2 besteht aus zwei Griffteilen 5 und 6, von denen zumindest der Griffteil 5 und vorzugsweise auch der Griffteil 6 schalenförmig ausgebildet ist. Der Hals 3 wird durch zwei Halsteile 7, 8 gebildet, die mit dem zugeordneten Griffteil 5 bzw. 6 einstückig ausgebildet sind. Die beiden Halsteile 7a, 8a sind ebenfalls schalenförmig ausgebildet. Der Bürstenkopf 4 (Fig. 2) weist einen Borstenträger 9 auf, von dem auf bekannte Weise Borstenbündel 10 abstehen. Der Borstenträger 9 ist lösbar auf einen Fortsatz 11 des Halsteiles 8 aufgesetzt. Beim vorliegenden Ausführungsbeispiel ist somit der Bürstenkopf 4 auswechselbar. Selbstverständlich ist es auch möglich, den Borstenträger 9 mit dem Halsteil 8 einstückig auszubilden, was in diesem Fall bedeutet, dass der Bürstenkopf 4 nicht auswechselbar ist. Am hintern Ende des Handgriffes 2 ist eine Verschlusskappe 12 vorgesehen, die einen durch die beiden schalenförmigen Griffteile 5 und 6 festgelegten Hohlraum 13 abschliesst. Die Verschlusskappe 12 ist beim vorliegenden Ausführungsbeispiel mittels eines Bajonettverschlusses festgehalten. Es ist jedoch auch möglich, die Verschlusskappe 12 z.B. aufschraubbar auszugestalten.

Der durch die Griff- und Halsteile 5, 6, 7, 8 festgelegte Hohlraum 13 wird durch eine am Griffteil 5 angeformte Querwand 14 in einen hinteren Hohlraum 13a und einen vorderen Hohlraum 13b unterteilt. In der Fig. 2 ist mit 15 eine auf der Innenseite der Griffteile 5, 6 vorgesehene Rastnut bezeichnet, die zur erwähnten Bajonettverbindung gehört, mittels der die Verschlusskappe 12 am Handgriff 2 lösbar festgehalten ist. Der hintere Hohlraum 13a dient zur Aufnahme einer nicht dargestellten Batterie, die sich am einen Ende an der Verschlusskappe 12 und am andern Ende an einer Kontaktfeder 16 abstützt, die an der Querwand 14 befestigt ist. Im Hals 3 ist ein Mikromotor 17 untergebracht, der mit einem Vibrationselement 18, z. B. einem Schwinganker, verbunden ist, der dazu dient, den Bürstenkopf 4 in Schwingung zu versetzen. Der Mikromotor ist über eine elektrische Verbindungsleitung 19 über die Verschlusskappe 12 mit dem einen Pol der Batterie im hinteren Hohlraum 13a verbunden. Eine weitere Verbindungsleitung 20 verbindet den Mikromotor 17 mit einem im Griffteil 5 vorgesehenen, von Hand betätigbaren Schalter 21, der über eine Verbindungsleitung 20' mit der Kontaktfeder 16, die mit dem andern Pol der Batterie in Kontakt steht, verbunden ist. Durch Betätigung des Schalters 21 wird der Mikromotor 17 ein- und ausgeschaltet. Für die Halterung bzw. Positionierung der verschiedenen elektrischen und mechanischen Teile des Antriebes für den Bürstenkopf 4 sind an wenigstens einem Griff- bzw. Halsteil 5, 7 oder 6, 8 Positionier- oder Halteteile, so z.B. die Querwand 14, vorgesehen.

Der Handgriff 2 und der Hals 3 bestehen vorzugsweise aus demselben Material und entweder aus demselben Kunststoff wie der Borstenträger 9 oder aus einem andersartigen Kunststoff. Vorzugsweise werden die Griff- und Halsteile 5, 7 bzw. 6, 8 im Ein- oder Mehrkomponentenspritzgiessverfahren hergestellt.

Wie aus den Figuren 1 und 2 hervorgeht werden die Griff- und Halsteile 5, 7 sowie 6, 8 in separaten Schritten hergestellt und dann zusammengefügt. Dabei bilden die Endflächen 5a, 7a und 6a, 8a der aneinander liegenden Teile 5, 7 und 6, 8 eine Trennfuge, die auf noch zu beschreibende Weise mittels einer Verbindungsnaht 22 (Fig. 3) verschlossen wird.

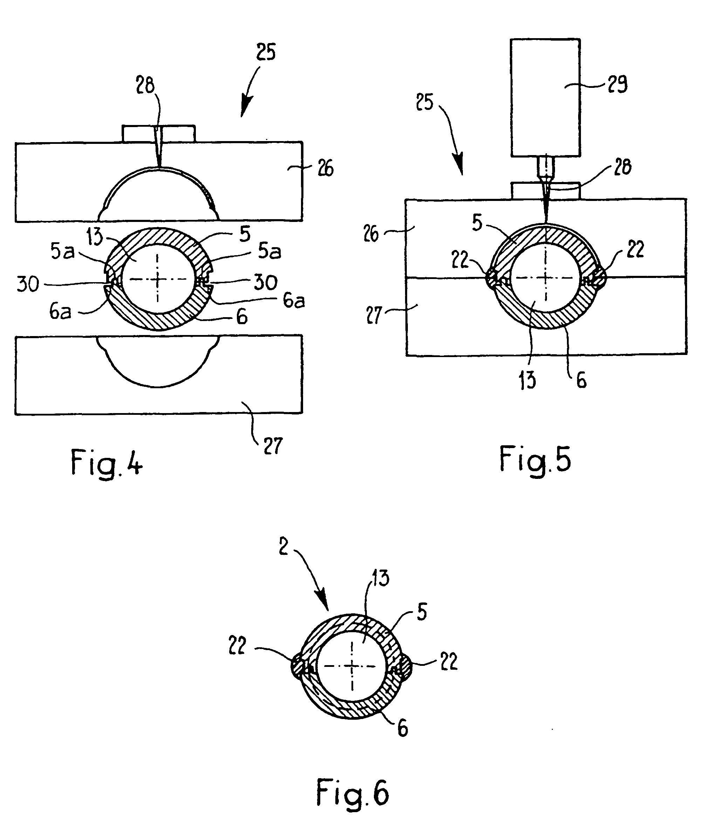

Anhand der Figuren 4-6 wird nun das Verfahren zur Herstellung einer Zahnbürste von der in den Figuren 1-3 gezeigten Art beschrieben.

Die wie erwähnt in separaten Schritten und z.B. an räumlich getrennten Orten hergestellten Griffteile 5, 6 mit angeformten Halsteilen 7 bzw. 8 werden zum fertigen Handgriff 2 mit Hals 3 zusammengefügt. Die zusammengefügten und gegebenenfalls durch zusätzliche mechanische Mittel zusammengehaltenen Griffteile 5, 6 werden dann in eine Spritzgussform 25 eingelegt, wie das in Fig. 4 dargestellt ist. Von dieser Spritzgussform 25 sind die beiden Formhälften 26 und 27 rein schematisch dargestellt. Mit 28 ist eine in der oberen Formhälfte 26 vorgesehene Einspritzöffnung bezeichnet. Die einander zugekehrten Endflächen 5a und 6a sowie die Endflächen 7a, 8a der Halsteile 7 und 8 legen eine Trennfuge 30 fest. Nach dem Schliessen der Spritzgussform 25, d.h. dem Zusammenbringen der beiden Formhälften 26, 27, wird mittels einer nur schematisch dargestellten Spritzeinheit 29 ein Kunststoffmaterial in den Formhohlraum der Spritzgussform 25 eingespritzt (Fig. 5). Die eingespritzte Kunststoffmasse verschliesst die Trennfuge 30 zwischen den Griff- und Halsteilen 5, 6, 7, 8 auf ihrer ganzen Länge oder nur über einen Teil ihrer Länge und bildet dann die Verbindungsnaht 22. In Fig. 6 ist der fertig und aus der Spritzgussform 25 entfernte Handgriff 2 im Querschnitt dargestellt.

Im beschriebenen Ausführungsbeispiel werden für die Griff- und Halsteile 5, 6, 7, 8 und die Verbindungsnaht 22 affine Kunststoffe verwendet, d.h. Kunststoffe, die beim Spritzgiessvorgang miteinander eine Materialverbindung eingehen. Dies ist z.B. dann der Fall, wenn für die Griff- und Halsteile 5, 6, 7, 8 Polypropylen (PP) und für die Verbindungsnaht 22 ein entsprechender thermoplastischer Kunststoff, vorzugsweise ein thermoplastisches Elastomer, verwendet wird. Eine solche Materialverbindung ergibt sich auch dann, wenn die Griff- und Halsteile 5, 6, 7, 8 aus SAN (Styrol-Acrylnitril) bestehen und für die Bildung der Verbindungsnaht 22 ein entsprechender thermoplastischer Kunststoff, z.B. ein geeignetes thermoplastisches Elastomer verwendet wird.

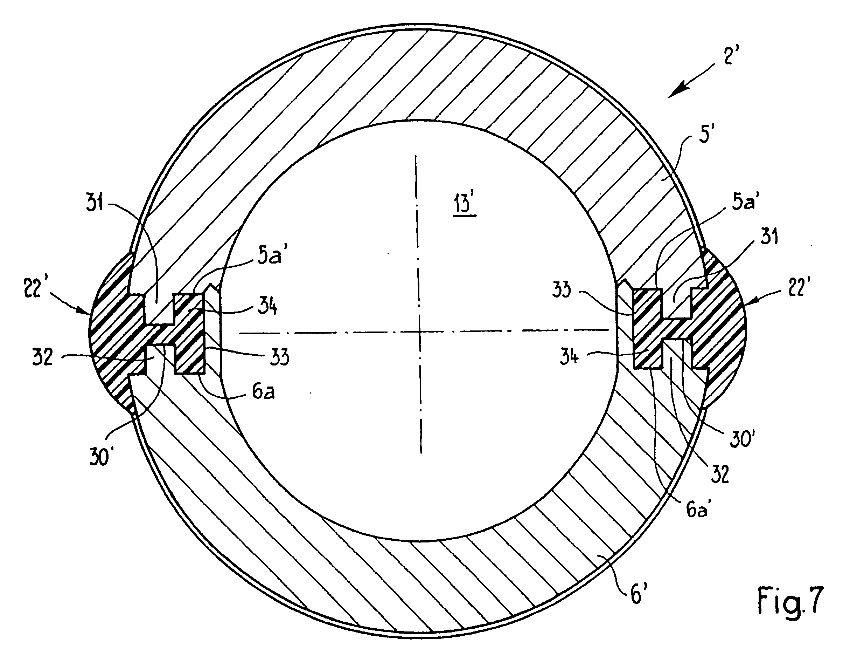

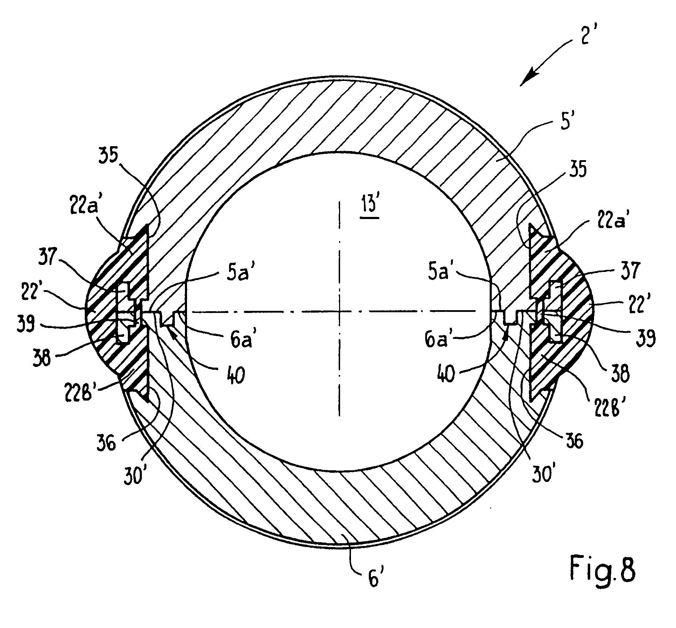

Das erfindungsgemässe Verfahren, d.h. das Verschliessen der Trennfuge 30 zwischen den Griff- bzw. Halsteilen 5, 6, 7, 8 im Spritzgiessverfahren, hat den Vorteil, dass auf diese Weise auch Griff- bzw. Halsteile miteinander verbunden werden können, die aus Kunststoffen bestehen, die zum Kunststoff, der für die Verbindungsnaht 22 verwendet wird, nicht affin sind. Dies ist z.B. dann der Fall, wenn der eine Griff- bzw. Halsteil 5, 7 aus Polypropylen (PP) und der andere Griffteil 6, 8 aus SAN besteht und zur Bildung der Verbindungsnaht 22 ein thermoplastisches Elastomer verwendet wird, das entweder mit PP oder SAN eine Materialverbindung eingeht und mit dem andern Kunststoff nicht. In solchen Fällen entsteht keine Materialverbindung zwischen den Teilen, was eine andere Ausgestaltung der Verbindungsnaht und/oder der Griff- bzw. Halsteile verlangt. Solche Ausführungsformen werden nun anhand der Fig. 7 und 8 beschrieben, in denen ein Handgriff 2' im Querschnitt gezeigt ist.

Bei der in der Fig. 7 gezeigten Ausführungsform sind in den einander zugekehrten, die Trennfuge 30' festlegenden Endflächen 5a', 6a' vorzugsweise leistenförmige Vorsprünge 31, 32 ausgebildet, die vom Kunststoffmaterial der Verbindungsnaht 22' umgeben sind. Die einander gegenüber liegenden Vorsprünge 31, 32 bilden einen Hohlraum 33, in den die eingespritzte Kunststoffmasse eindringen kann. In der Fig. 7 ist der in diesem Raum 33 liegende Teil der Verbindungsnaht 22' mit 34 bezeichnet.

Durch diese Ausbildung ergibt sich eine mechanische, d.h. form- und kraftschlüssige Verbindung zwischen den Griffteilen 5', 6' und der Verbindungsnaht 22'. Selbstverständlich kann die form- oder kraftschlüssige Verbindung zwischen den Griffteilen 5', 6' und der Verbindungsnaht 22' auch auf andere Weise erzeugt werden, z.B. durch Vorsehen von Vertiefungen in den Endflächen 5a' und 6a' der Griffteile 5', 6', die dann mit dem Kunststoffmaterial der Verbindungsnaht 22' gefüllt werden.

Beim Ausführungsbeispiel gemäss der Fig. 8 sind benachbart zur Trennfuge 30' in den beiden Griffteilen 5', 6' Ausnehmungen 35 bzw. 36 vorhanden, die mit dem Kunststoffmaterial der Verbindungsnaht 22' gefüllt sind. Dabei hintergreifen die in diesen Ausnehmungen 35, 36 liegenden Teile 22a', 22b' der Verbindungsnaht 22' leistenartige Vorsprünge 37 bzw. 38 der Griffteile 5', 6'. Die sich jeweils gegenüberliegenden Ausnehmungen 35, 36 in den Griffteilen 5', 6' sind jeweils über einen Teil der Länge der Trennfuge 30' mittels Durchlässen 39 miteinander verbunden, die mit dem Kunststoffmaterial der Verbindungsnaht 22' gefüllt sind. Zum Zusammenhalten der zusammengefügten Griffteile 5', 6' vor dem Ueberspritzen entlang der Trennfuge 30' sind im Bereich der einander zugekehrten Endflächen 5a', 6a' der Griffteile 5', 6' mechanische Zentrier- oder Halteanordnungen 40 vorhanden, die beim Ausführungsbeispiel gemäss Fig. 8 in der Art von Nut-Feder-Verbindungen ausgebildet sind. Zu diesen Nut-Feder-Verbindungen gehören vorzugsweise leistenartige Vorsprünge im einen Griffteil 5', die in gegengleich ausgebildete Nuten im andern Griffteil 6' eingreifen.

Eine derartige mechanische Verbindung zwischen den Griffteilen 5', 6' ermöglicht es auch, einen Griffteil oder beide Griffteile aus einem andern Material herzustellen als aus Kunststoff, z.B. aus einem Metall wie z.B. Buntmetall oder Aluminium oder gar aus Holz.

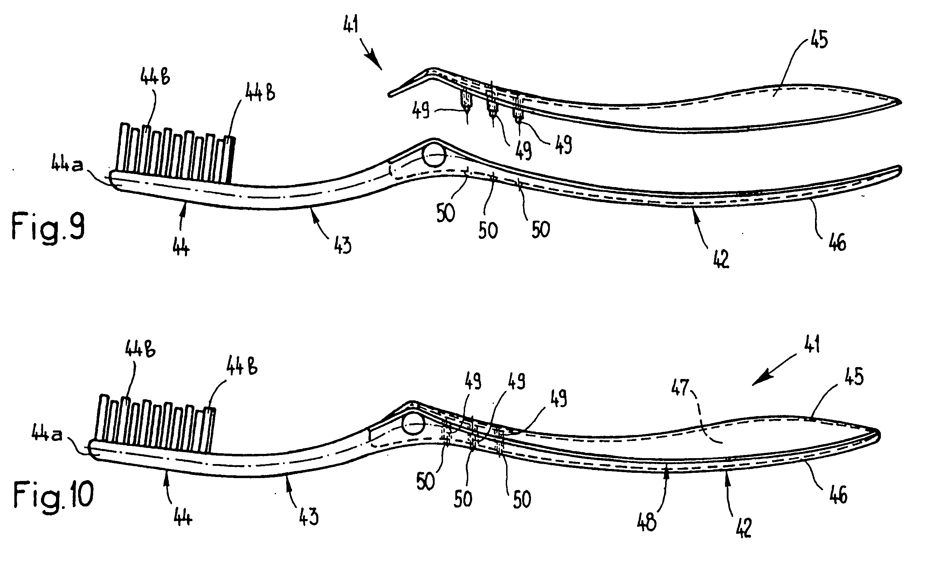

Mit dem anhand der Figuren 4-7 erläuterten Verfahren lassen sich auch Zahnbürsten, die anders als die Zahnbürste gemäss den Figuren 1-3 ausgestaltet sind, herstellen, wie das nun unter Bezugnahme auf die Figuren 9 und 10 beispielhaft erläutert wird.

Die in diesen Figuren 9 und 10 gezeigte Zahnbürste 41 besteht aus einem Handgriff 42, einem Hals 43 und einem Bürstenkopf 44. Letzterer weist einen mit dem Hals 43 einstückigen Borstenträger 44a auf, der mit Borstenbündeln 44b bestückt ist. Der Handgriff 42 besteht aus einem schalenförmig ausgebildeten oberen Griffteil 45 und einem unteren Griffteil 46, der mit dem Hals 43 einstückig ist und auch schalenförmig ausgebildet sein kann. Die beiden Griffteile 45, 46 legen einen Hohlraum 47 fest. Nach dem Zusammenfügen der beiden Griffteile 45, 48 wird die Trennfuge wie bereits beschrieben im Spritzgiessverfahren mittels eines Kunststoffmaterials verschlossen. Die dabei gebildete Verbindungsnaht ist mit 48 (Fig. 9) bezeichnet.

Die beiden Griffteile 45, 46 werden vor dem Ueberspritzen der Trennfuge mit dem Kunststoffmaterial durch mechanische Mittel gegenseitig positioniert und zusammengehalten. Hierzu ist der obere Griffteil 45 mit nach unten abstehenden, stiftartigen Nocken 49 versehen, die bei zusammengefügten Griffteilen 45, 46 in Oeffnungen 50 einrasten, die im unteren Griffteil 46 vorgesehen sind.

Die beiden Griffteile 45, 46 werden in getrennten Schritten hergestellt. Bestehen die Griffteile 45, 46 aus Kunststoff, so erfolgt deren Herstellung vorzugsweise im Ein- oder Mehrkomponentenspritzgiessverfahren.

Nach dem Zusammenfügen der Griffteile 45, 46 wird der Handgriff 42 in einer Spritzgussform im Bereich der Trennfuge zwischen den Griffteilen 45, 46 von einem Kunststoffmaterial überspritzt, wie das anhand der Figuren 4-6 erläutert worden ist.

Bei den vorstehend beschriebenen Ausführungsbeispielen werden die Griffteile 5, 6, 45, 46 örtlich getrennt voneinander hergestellt, vorzugsweise im Spritzgiessverfahren, anschliessend zusammengefügt und dann in einem weiteren Spritzgiessvorgang entlang der Trennfuge 30 mit dem Kunststoffmaterial der Verbindungsnaht 22, 48 umspritzt.

Es ist aber auch denkbar, gewisse dieser Schritte örtlich zusammenzulegen. So kann z.B. zuerst ein erster Griffteil hergestellt werden. Ein zweiter Griffteil wird in einem Zweikomponenten-Spritzgusswerkzeug hergestellt und verbleibt in diesem Spritzgusswerkzeug. Der erste Griffteil wird mit dem zweiten Griffteil im Spritzgusswerkzeug zusammengefügt, z.B. mit Hilfe eines Roboters. Dann erfolgt in diesem Zweikomponenten-Spritzgusswerkzeug, gegebenenfalls nachdem die zusammengefügten Griffteile, beispielsweise mittels eines Roboters, in eine weitere Kavität des Spritzgusswerkzeuges umgesetzt worden sind, das Bilden der Verbindungsnaht durch Einspritzen des entsprechenden Kunststoffmaterials. Es ist auch möglich, den zweiten Griffteil in die weitere Kavität zu verbringen, dann den ersten Griffteil mit dem zweiten Griffteil zusammenzufügen, und danach durch Einspritzen des entsprechenden Kunststoffmaterials in diese weitere Kavität die Verbindungsnaht zu bilden.

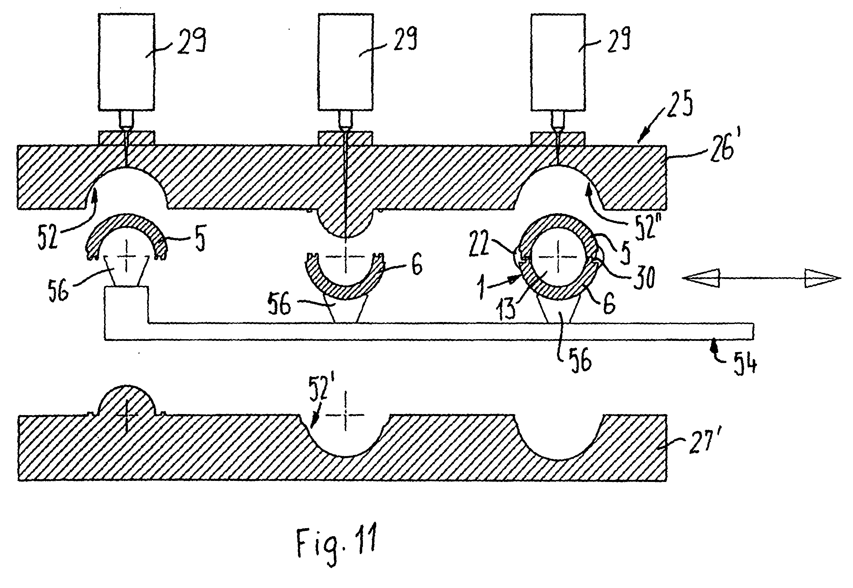

Die Herstellung der beiden Griffteile und der Verbindungsnaht kann auch am selben Ort erfolgen, d.h. in einer Mehrkomponenten-Spritzgussanlage, was anhand der Fig. 11 erläutert wird.

Fig. 11 zeigt in gleicher Darstellung wie Fig. 4 und 5 die beiden Formhälften 26' und 27' eines Dreikomponenten-Spritzgusswerkzeugs 25'. In einer ersten Kavität 52 wird - bei geschlossenem Spritzgusswerkzeug 25' - der erste Griffteil 5 durch Einspritzen des entsprechenden Kunststoffmaterials mittels der zugeordneten Spritzeinheit 29 hergestellt. Gleichzeitig wird in einer zweiten Kavität 52' des Spritzgusswerkzeugs 25' der zweite Griffteil 6 durch Einspritzen eines anderen Kunststoffmaterials mittels der zugeordneten Spritzeinheit 29 gefertigt. Schliesslich wird, ebenfalls gleichzeitig, in einer dritten Kavität 52" des Spritzgusserkzeuges 25' die Verbindungsnaht 22 zwischen den in einem vorhergehenden Spritzzyklus hergestellten und dann zusammengefügten Griffteilen 5 und 6 durch Einspritzen eines weiteren unterschiedlichen Kunststoffmaterials mittels der zugeordneten Spritzeinheit 29 gebildet.

Mit 54 ist ein, Saugköpfe 56 für die Griffteile 5, 6 und die Zahnbürste 1 aufweisender Roboterarm bezeichnet. Bei nach einem Spritzvorgang voneinander getrennten Formhälften 26', 27' fassen die mit einer Unterdruckquelle verbindbaren Saugköpfe 56 gleichzeitig die beiden Griffteile 5, 6 und die Zahnbürste 1 und heben diese aus den entsprechenden Kavitäten 52, 52', 52".

Der erste Griffteil 5 wird dann mittels des Roboterarms 54 in die dritte Kavität 52" der Formhälfte 26' eingesetzt und durch Lüften des entsprechenden Saugkopfs 56 freigegeben. Anschliesssend werden die Griffteile 5, 6 zusammengefügt, indem der Roboterarm 54 den zweiten Griffteil 6 auf den ersten Griffteil 5 aufsetzt. Durch Lüften des zugeordneten Saugkopfs 56 wird der zweite Griffteil 6 freigegeben. Nachdem der Roboterarm 54 aus dem Bereich des Spritzgusswerkzeugs 25' - auch zur Abgabe der Zahnbürste 1 - hinausbewegt worden ist, werden die beiden Formhälften 26', 27' aufeinander zu bewegt, um das Spritzgusswerkzeug 25' für den nächsten Einspritzvorgang zu schliessen.

Es ist auch möglich, die beiden Griffteile 5, 6 ausserhalb des Spritzgusswerkzeugs 25' - beispielsweise während eines Spritzvorgangs - zusammenzufügen und dann in die dritte Kavität 52" einzulegen. Diese Vorgehensweise ist vor allem dann vorteilhaft, wenn weitere Teile in den Hohlraum 13 einzubringen sind oder einer der Griffteile 5, 6 zu veredeln/bedrucken ist.

Der Vollständigkeit halber sei erwähnt, dass es selbstverständlich auch möglich ist, mehr als eine der Kavitäten 52, 52', 52" mittels einer gemeinsamen Spritzeinheit 29 zu speisen. Dies dann, wenn die Griffteile 5, 6 aus demselben Kunststoffmaterial bestehen, oder das Kunststoffmaterial für die Verbindungsnaht 22 auch zur Herstellung einer Membrane auf einer der oder beiden Griffteilen 5, 6 verwendet wird.

Selbstverständlich kann das Spritzgusswerkzeug 25' mehrere Reihen von ersten, zweiten und dritten Kavitäten 52, 52', 52" zur gleichzeitigen Herstellung mehrerer Zahnbürsten 1 aufweisen.

Für die Bildung der Verbindungsnaht 22, 48 wird wie beschrieben vorzugsweise ein weich, d.h. gummielastisch bleibender Kunststoff mit einer Shorehärte von vorzugsweise 10-70 verwendet. Es ist aber auch möglich, gleich wie für die Griff- und Halsteile einen harten Kunststoff zu verwenden.

Wenigstens der oben liegende Griffteil 5 bzw. 44 kann ganz oder bereichsweise opak oder ganz oder teilweise transparent sein.

Der Hohlraum 13, 47 im Handgriff 2, 42 kann mit einer Flüssigkeit und/oder Gegenständen gefüllt sein. Bei Zahnbürsten, wie sie in den Figuren 8 und 9 gezeigt sind, erfolgt das Füllen des Hohlraumes vor dem Spritzen der Verbindungsnaht.

Dadurch, dass die Verbindungsnaht 22, 48 aus Kunststoff besteht, kann die Verbindungsnaht durch Wahl der Farbe des Kunststoffes auch als optisches Gestaltungselement eingesetzt werden.

Im selben Spritzgiessvorgang, in welchem das Kunststoffmaterial für die Verbindungsnaht eingespritzt wird, können auch andere Bereiche des Handgriffes, des Halses oder des Bürstenkopfes , z.B. der Fingerauflagebereich oder Dichtelemente, aus diesem Kunststoffmaterial gebildet werden.

## Patentansprüche

1. Verfahren zum Herstellen eines hohlen Handgriffes (2; 41) für ein Zahnreinigungsgerät (1;41), bei dem wenigstens zwei in getrennten Schritten erzeugte Griffteile (5, 6; 45, 46), von denen mindestens der eine Griffteil (5; 45) schalenförmig ausgebildet ist, zusammengefügt und entlang der gemeinsamen Trennfuge (30) miteinander verbunden werden, **dadurch gekennzeichnet, dass** zur Herstellung einer dichten und nicht lösbaren Verbindung zwischen den Griffteilen (5, 6; 45, 46) die zusammengefügten Griffteile (5, 6; 45, 46) im Spritzgiessverfahren entlang wenigstens eines Teils der gemeinsamen Trennfuge (30) mit einem Kunststoffmaterial überspritzt werden.

2. Verfahren nach Anspruch 1, **dadurch gekennzeichnet, dass** die örtlich getrennt voneinander hergestellten Griffteile (5, 6; 45, 46) zusammengefügt und in eine Spritzgussform (25) eingelegt werden, in der die Griffteile (5, 6; 45, 46) entlang wenigstens eines Teils der gemeinsamen Trennfuge (30) vom Kunststoffmaterial überspritzt werden.

3. Verfahren nach Anspruch 1 oder 2, **dadurch gekennzeichnet, dass** aus Kunststoff bestehende Griffteile (5, 6; 45, 46) verwendet werden.

4. Verfahren nach Anspruch 3, **dadurch gekennzeichnet, dass** die Herstellung der Griffteile (5, 6; 45, 46) und das Überspritzen der Trennfuge (30) in einem einzigen Spritzgusswerkzeug (25') in unterschiedlichen Kavitäten (52, 52', 52") erfolgt.

5. Verfahren nach Anspruch 1 oder 2, **dadurch gekennzeichnet, dass** ein Griffteil zumindest teilweise aus einem andern Material als Kunststoff hergestellt wird, z.B. aus Metall.

6. Verfahren nach einem der Ansprüche 1-5, **dadurch gekennzeichnet, dass** für das Verschliessen der Trennfuge (30) ein vorzugsweise gummielastischer thermoplastischer Kunststoff verwendet wird.

7. Verfahren nach den Ansprüchen 3 und 6, **dadurch gekennzeichnet, dass** für die Griffteile (5, 6; 45, 46) Kunststoffe verwendet werden, die mit dem Kunststoffmaterial der Trennfuge (30) eine Materialverbindung eingehen.

8. Verfahren nach einem der Ansprüche 1-7, **dadurch gekennzeichnet, dass** die Griffteile (5', 6') im Bereich der Trennfuge (30') derart geformt werden, dass sie über die aus dem umspritzten Kunststoff bestehenden Verbindungsnaht (22') formschlüssig miteinander verbunden werden.

9. Verfahren nach einem der Ansprüche 1-8, **dadurch gekennzeichnet, dass** die Griffteile über die aus dem umspritzten Kunststoff bestehende Verbindungsnaht kraftschlüssig miteinander verbunden werden.

10. Verfahren nach einem der Ansprüche 1-9, **dadurch gekennzeichnet, dass** die zusammengefügten Griffteile (45, 46) vor dem Ueberspritzen mechanisch zusammengehalten werden, z.B. mittels einer Steckverbindung (49, 50).

11. Verfahren nach einem Ansprüche 1-10, **dadurch gekennzeichnet, dass** der durch die zusammengefügten Griffteile (5, 6; 45, 46) gebildete Hohlraum (13; 47) mit einer Flüssigkeit und/oder Gegenständen gefüllt wird.

12. Verfahren nach einem der Ansprüche 1-11, **dadurch gekennzeichnet, dass** an den zur Trennfuge (30) hin gerichteten Endflächen (5a', 6a') der Griffteile (5', 6') Vorsprünge (31, 32) bzw. Vertiefungen ausgebildet werden, die mit dem Kunststoffmaterial umspritzt werden bzw. in die das Kunststoffmaterial eingespritzt wird.

13. Hohler Handgriff (2; 41) für ein Zahnreinigungsgerät (1; 41), insbesondere herstellbar nach dem Verfahren gemäss einem oder mehreren der Ansprüche 1-12, der aus mindestens zwei in getrennten Schritten hergestellten und zusammengefügten Griffteilen (5, 6; 45, 46), von denen mindestens der eine Griffteil (5; 45) schalenförmig ausgebildet ist, besteht, die entlang einer gemeinsamen Trennfuge (30) miteinander verbunden sind, **dadurch gekennzeichnet, dass** die dichte und nicht lösbare Verbindung durch eine sich entlang wenigstens eines Teils der gemeinsamen Trennfuge (30) erstreckende, im Spritzgiessverfahren erzeugte Verbindungsnaht (22; 48) aus Kunststoffmaterial gebildet ist.

14. Handgriff nach Anspruch 13, **dadurch gekennzeichnet, dass** die Verbindungsnaht (22; 48) aus einem thermoplastischen Kunststoff besteht.

15. Handgriff nach Anspruch 13 oder 14, **dadurch gekennzeichnet, dass** die Griffteile (5, 6; 45, 46) aus Kunststoff bestehen.

16. Handgriff nach Anspruch 13 oder 14, **dadurch gekennzeichnet, dass** wenigstens ein Griffteil mindestens teilweise aus Metall besteht.

17. Handgriff nach einem der Ansprüche 13-16, **dadurch gekennzeichnet, dass** wenigstens ein Griffteil zumindest bereichsweise opak oder ganz oder teilweise transparent ist.

18. Handgriff nach einem der Ansprüche 13-17, **dadurch gekennzeichnet, dass** die Griffteile (45, 46) zusätzlich mechanisch miteinander verbunden sind, vorzugsweise mittels einer vor dem Bilden der Verbindungsnaht (22) wirksamen Steckverbindung (49, 50).

19. Handgriff nach einem der Ansprüche 13-18, **dadurch gekennzeichnet, dass** der durch die Griffteile (5, 6; 45, 46) gebildete Hohlraum (13; 47) mit einer Flüssigkeit und/oder Gegenständen gefüllt ist.

20. Handgriff nach einem der Ansprüche 13-18 für eine elektrisch angetriebene Zahnbürste (1), **dadurch gekennzeichnet, dass** im durch die Griffteile (5, 6) gebildeten Hohlraum (13) zum Antrieb gehörende Elemente (16, 19, 20) und/oder eine Batterie untergebracht sind, wobei zumindest an einem Griffteil (5) Positionier- bzw. Halteteile (14) für diese Antriebselemente (16, 19, 20) bzw. die Batterie vorgesehen sind.

21. Handgriff nach einem der Ansprüche 13-20, **dadurch gekennzeichnet, dass** an den zur Trennfuge (30) hin gerichteten Endflächen (5a', 6a') der Griffteile (5', 6') Vorsprünge (31, 32) bzw. Vertiefungen ausgebildet sind, die vom Kunststoffmaterial der Verbindungsnaht (22') umgeben sind bzw. die mit dem Kunststoffmaterial der Verbindungsnaht (22') gefüllt sind.

## Claims

1. A method for producing a hollow handle (2; 41) for a teeth cleaning device (1; 41), in which at least two handle parts (5, 6; 45, 46) produced in separate steps, of which at least one handle part (5; 45) is formed in a shell-shaped manner, are joined together and connected to each other along the common parting join (30), **characterized in that**, for producing a sealed and nondetachable connection between the handle parts (5, 6; 45, 46), the joined-together handle parts (5, 6; 45, 46) are coated with a plastics material along at least part of the common parting join (30) by the injection-molding process.

2. The method as claimed in claim 1, **characterized in that** the handle parts (5, 6; 45, 46) produced at separate locations from each other are joined together and placed into an injection mold (25), in which the handle parts (5, 6; 45, 46) are coated with a plastics material along at least part of the common parting join (30).

3. The method as claimed in claim 1 or 2, **characterized in that** handle parts (5, 6; 45, 46) consisting of plastic are used.

4. The method as claimed in claim 3, **characterized in that** the production of the handle parts (5, 6; 45, 46) and the coating of the parting join (30) take place in different cavities (52, 52', 52'') in a single injection mold (25').

5. The method as claimed in claim 1 or 2, **characterized in that** one handle part is produced at least partly from a material other than plastic, for example of metal.

6. The method as claimed in one of claims 1-5, **characterized in that** a preferably elastomeric thermoplastic material is used for the closing of the parting join (30).

7. The method as claimed in claims 3 and 6, **characterized in that** plastics which enter into a material bond with the plastics material of the parting join (30) are used for the handle parts (5, 6; 45, 46).

8. The method as claimed in one of claims 1-7, **characterized in that** the handle parts (5', 6') are formed in the region of the parting join (30') in such a way that they are positively connected to each other by means of the connection seam (22') consisting of the encapsulating plastic.

9. The method as claimed in one of claims 1-8, **characterized in that** the handle parts are nonpositively connected to each other by means of the connection seam consisting of the encapsulating plastic.

10. The method as claimed in one of claims 1-9, **characterized in that** the joined-together handle parts (45, 46) are mechanically held together, for example by means of a plug-in connection (49, 50), before the coating.

11. The method as claimed in one of claims 1-10, **characterized in that** the hollow space (13; 47) formed by the joined-together handle parts (5, 6; 45, 46) is filled with a liquid and/or items.

12. The method as claimed in one of claims 1-11, **characterized in that** on the end faces (5a', 6a') of the handle parts (5', 6') directed toward the parting join (30) there are formed projections (31, 32) or depressions, which are encapsulated with the plastics material or into which the plastics material is injection-molded.

13. A hollow handle (2; 41) for a teeth cleaning device (1; 41), in particular which can be produced by the method according to one or more of claims 1-12, which comprises at least two handle parts (5, 6; 45, 46) produced in separate steps and joined together, of which at least one handle part (5; 45) is formed in a shell-shaped manner, which parts are connected to each other along a common parting join (30), **characterized in that** the sealed and nondetachable connection is formed by a connection seam (22; 48) of plastics material extending along at least part of the common parting join (30) and produced by an injection-molding process.

14. The handle as claimed in claim 13, **characterized in that** the connection seam (22; 48) consists of a thermoplastic material.

15. The handle as claimed in claim 13 or 14, **characterized in that** the handle parts (5, 6; 45, 46) consist of plastic.

16. The handle as claimed in claim 13 or 14, **characterized in that** at least one handle part consists at least partly of metal.

17. The handle as claimed in one of claims 13-16, **characterized in that** at least one handle part is opaque at least in certain regions or transparent completely or in certain parts.

18. The handle as claimed in one of claims 13-17, **characterized in that** the handle parts (45, 46) are additionally mechanically connected to each other, preferably by means of a plug-in connection (49, 50) which is effective before the forming of the connection seam (22).

19. The handle as claimed in one of claims 13-18, **characterized in that** the hollow space (13; 47) formed by the handle parts (5, 6; 45, 46) is filled with liquid and/or items.

20. The handle as claimed in one of claims 13-18 for an electrically operated toothbrush (1), **characterized in that** elements (16, 19, 20) belonging to the drive and/or a battery are accommodated in the hollow space (13) formed by the handle parts (5, 6), positioning or holding parts (14) for these drive elements (16, 19, 20) or the battery being provided at least on one handle part (5).

21. The handle as claimed in one of claims 13-20, **characterized in that** on the end faces (5a', 6a') of the handle parts (5', 6') directed toward the parting join (30) there are formed projections (31, 32) or depressions, which are surrounded by the plastics material of the connection seam (22') or filled with the plastics material of the connection seam (22').

## Revendications

1. Procédé de production d'un manche creux (2 ; 41) pour un instrument de nettoyage des dents (1 ; 41), dans lequel au moins deux parties de manche (5, 6 ; 45, 46) fabriquées dans des étapes séparées, dont une partie de manche (5 ; 45) au moins est réalisée en forme de coque, sont jointes et sont reliées l'une à l'autre le long de la ligne de joint commune (30), **caractérisé en ce que** pour réaliser une liaison étanche et non séparable entre les parties de manche (5, 6 ; 45, 46) les parties de manche (5, 6 ; 45, 46) jointes sont recouvertes d'une matière synthétique par moulage par injection, le long d'au moins une partie de la ligne de joint commune (30).

2. Procédé selon la revendication 1, **caractérisé en ce que** les parties de manche (5, 6 ; 45, 46) produites de manière séparée localement l'une de l'autre sont jointes et placées dans un moule d'injection (25) dans lequel les parties de manche (5, 6 ; 45, 46) sont recouvertes par injection de la matière synthétique le long au moins d'une partie de la ligne de joint commune (30).

3. Procédé selon la revendication 1 ou 2, **caractérisé en ce que** des parties de manche (5, 6 ; 45, 46) en matière synthétique sont utilisées.

4. Procédé selon la revendication 3, **caractérisé en ce que** la production des parties de manche (5, 6 ; 45, 46) et le recouvrement par injection de la ligne de joint (30) s'effectuent dans un outil d'injection (25') unique dans des cavités (52, 52', 52") différentes.

5. Procédé selon la revendication 1 ou 2, **caractérisé en ce qu'**une partie de manche est produite au moins partiellement en un matériau autre que de la matière synthétique, par exemple en métal.

6. Procédé selon l'une des revendications 1 à 5, **caractérisé en ce que** pour obturer la ligne de joint (30) on utilise de préférence une matière synthétique thermoplastique à élasticité de caoutchouc.

7. Procédé selon les revendications 3 et 6, **caractérisé en ce que** pour les parties de manche (5, 6 ; 45, 46) sont utilisées des matières synthétiques qui entrent en liaison de matière avec la matière synthétique de la ligne de joint (30).

8. Procédé selon l'une des revendications 1 à 7, **caractérisé en ce que**, dans la zone de la ligne de joint (30'), les parties de manche (5', 6') sont formées de telle façon qu'elles sont reliées l'une à l'autre par correspondance de formes par l'intermédiaire du cordon de liaison (22') constitué de la matière synthétique injectée autour.

9. Procédé selon l'une des revendications 1 à 8, **caractérisé en ce que** les parties de manche sont reliées l'une à l'autre par adhérence, par l'intermédiaire du cordon de liaison constitué de la matière synthétique appliquée par injection.

10. Procédé selon l'une des revendications 1 à 9, **caractérisé en ce qu'**avant le recouvrement par injection les parties de manche (45, 46) jointes sont maintenues ensemble mécaniquement, par exemple au moyen d'une liaison enfichée (49, 50).

11. Procédé selon l'une des revendications 1 à 10, **caractérisé en ce que** l'espace creux (13 ; 47) formé par les parties de manche (5, 6 ; 45, 46) jointes est rempli d'un liquide et/ou d'objets.

12. Procédé selon l'une des revendications 1 à 11, **caractérisé en ce qu'**aux faces d'extrémité (5a', 6a'), orientées vers la ligne de joint (30), des parties de manche (5', 6') sont réalisés des saillants (31, 32) ou des creux, qui sont entourés par injection de la matière synthétique ou dans lesquels est injectée la matière synthétique.

13. Manche creux (2 ; 41) pour un instrument de nettoyage des dents (1 ; 41) pouvant en particulier être produit d'après le procédé selon l'une ou plusieurs des revendications 1 à 12, qui est constitué d'au moins deux parties de manche (5, 6 ; 45, 46) fabriquées dans des étapes séparées et jointes, dont une partie de manche (5 ; 45) au moins est réalisée en forme de coque, qui sont reliées l'une à l'autre le long d'une ligne de joint commune (30), **caractérisé en ce que** la liaison étanche et non séparable est formée par un cordon de liaison (22 ; 48) en matière synthétique réalisé par moulage par injection, s'étendant sur au moins une partie de la ligne de joint commune (30).

14. Manche selon la revendication 13, **caractérisé en ce que** le cordon de liaison (22 ; 48) est constitué d'une matière synthétique thermoplastique.

15. Manche selon la revendication 13 ou 14, **caractérisé en ce que** les parties de manche (5, 6 ; 45, 46) sont constituées de matière synthétique.

16. Manche selon la revendication 13 ou 14, **caractérisé en ce qu'**au moins une partie de manche est constituée au moins partiellement de métal.

17. Manche selon l'une des revendications 13 à 16, **caractérisé en ce qu'**au moins une partie de manche est opaque au moins par endroits, ou totalement ou partiellement transparente.

18. Manche selon l'une des revendications 13 à 17, **caractérisé en ce que** les parties de manche (45, 46) sont en outre reliées mécaniquement l'une à l'autre, de préférence au moyen d'une liaison enfichée (49, 50) active avant la formation du cordon de liaison (22).

19. Manche selon l'une des revendications 13 à 18, **caractérisé en ce que** l'espace creux (13 ; 47) formé par les parties de manche (5, 6 ; 45, 46) est rempli d'un liquide et/ou d'objets.

20. Manche selon l'une des revendications 13 à 18 pour une brosse à dent (1) entraînée électriquement, **caractérisé en ce que** des éléments (16, 19, 20) appartenant à l'entraînement et/ou une pile sont logés dans l'espace creux (13) formé par les parties de manche (5, 6), des pièces de positionnement ou de maintien (14) pour ces éléments d'entraînement (26, 19, 20) ou pour la pile étant prévues sur au moins une partie de manche (5).

21. Manche selon l'une des revendications 13 à 20, **caractérisé en ce que** sur les faces d'extrémité (5a', 6a'), orientées vers la ligne de joint (30), des parties de manche (5', 6') sont réalisés des saillants (31, 32) ou des creux, qui sont entourés de la matière synthétique du cordon de liaison ou qui sont remplis de la matière synthétique du cordon de liaison (22').
